# EUROPEAN PATENT APPLICATION

(11) **EP 4 357 645 A1**
(43) Date of publication of application: **24.04.2024**
(21) Application number: 21945935.1
(22) Date of filing: 15.06.2021
(51) Int. Cl.: F16J 15/3244, F16J 15/3252

(54) **SEALING DEVICE**

(71) Applicant: NOK Corporation, Minato-ku, Tokyo 105-8585 (JP)
(72) Inventor: ONO, Satoshi, Fukushima-shi, Fukushima 960-1193 (JP); SATO, Yuki, Fukushima-shi, Fukushima 960-1193 (JP)
(74) Representative: Global IP Europe Patentanwaltskanzlei
(86) International application number: PCT/JP2021/022653
(87) International publication number: WO 2022/264255

(57) **Abstract**

A sealing device which can cause stable sealing performances to be exerted even in a use environment in which a shaft relatively rotates forward/backward with respect to a housing is provided.

A sealing device 10 which seals an annular gap between a shaft 500 and a housing 600 that relatively rotate, characterized in that a first seal 100A in slidable contact with an outer peripheral surface of the shaft 500 in a state where an inner-peripheral end side is deformed so as to be curved toward a sealing-target region side (O) with insertion of the shaft 500 is provided, and in the region sliding on the outer peripheral surface of the shaft 500 in the first seal 100A, a pair of screw pump grooves 111, 112 are provided that extend from a position away from an end part on the sealing-target region side (O) toward an opposite side (A) to the sealing-target region side (O), and an interval between the pair of screw pump grooves or screw pump projections 111, 112 is narrowed as they go toward the opposite side (A).

## Description

### [Technical Field]

The present invention relates to a sealing device which seals an annular gap between a shaft that relatively rotates and a housing.

### [Background Art]

In a sealing device which seals an annular gap between a shaft that relatively rotates and a housing, a seal lip made of a rubber-state elastic body is constituted to slide on an outer peripheral surface of the shaft in general. However, under such an environment that a relative rotation speed of the shaft with respect to the housing is fast or it is difficult to raise lubricity or the like, a resin-made seal is used in some cases. In general, in the case of the resin-made seal, sealing performances is lower than a seal made of rubber. Thus, such an art is known that a screw pump groove or a screw pump projection which causes a screw pump effect to be exerted is provided in a sliding region of the resin-made seal so as to return a sealing-target fluid which is to leak out to a sealing-target region side with the relative rotation with respect to the shaft.

In the art as described above, a high sealing performance can be exerted in such a use environment that a relative rotation direction of the shaft with respect to the housing is determined to a certain direction. However, the aforementioned art could not be used in a use environment that the shaft relatively rotates forward/backward with respect to the housing.

### [Citation List]

### [Patent Literature]

[PTL 1]
   Japanese Patent Application Publication No. 2001-165328
[PTL 2]
   Japanese Patent Application Publication No. 2009-204039

### [Summary of Invention]

### [Technical Problem]

An object of the present invention is to provide a sealing device which can cause a stable sealing performance to be exerted even under a use environment in which a shaft relatively rotates forward/backward with respect to a housing.

### [Solution to Problem]

The present invention employed the following means in order to solve the aforementioned problem.

That is, a sealing device of the present invention is
a sealing device which seals an annular gap between a shaft and a housing that relatively rotate, including:
a resin-made seal which is brought into slidable contact with an outer peripheral surface of the shaft in a state where an inner-peripheral end side is deformed to be curved toward a sealing-target region side by insertion of the shaft, wherein
in a region sliding on the outer peripheral surface of the shaft in the resin-made seal, a pair of screw pump grooves or screw pump projections are provided that extend from a position away from an end part on the sealing-target region side toward an opposite side to the sealing-target region side, and an interval between the pair of screw pump grooves or screw pump projections is narrowed as they go toward the opposite side.

According to the present invention, when the shaft relatively rotates forward with respect to the housing, by means of a screw pump effect of either one of the pair of screw pump grooves or either one of the pair of screw pump projections, a sealing-target fluid to leak out can be returned to the sealing-target region side. Moreover, when the shaft relatively rotates backward with respect to the housing, by means of the screw pump effect of the other of the pair of screw pump grooves or the other of the pair of screw pump projections, the sealing-target fluid to leak out can be returned to the sealing-target region side. As described above, the screw pump effect can be exerted in either of the case where the shaft relatively rotates forward with respect to the housing and the case of being rotated backward and thus, even the resin-made seal can exert the stable sealing performance.

The pair of screw pump grooves or screw pump projections are preferably provided in plural pairs with an interval in a circumferential direction.

As a result, the screw pump effect can be exerted at plural spots in the circumferential direction.

The resin-made seal is preferably constituted by a flat washer-shaped member.

It is preferable that at least one annular member fixed to a shaft hole formed in the housing is provided; and
the resin-made seal has an outer-peripheral end side thereof fixed to at least one of the annular members.

Note that each of the aforementioned configurations can be employed in combination as much as possible.

### [Advantageous Effects of Invention]

As described above, according to the present invention, even under such a use environment that the shaft relatively rotates forward/backward with respect to the housing, a stable sealing performance can be exerted.

### [Brief Description of Drawings]

[Fig. 1]

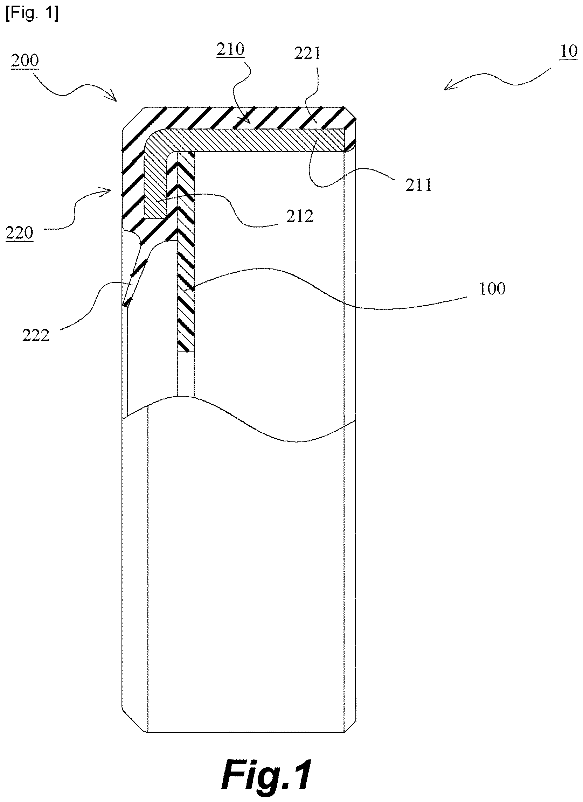

   Fig. 1 is a partially broken sectional diagram of a sealing device according to an embodiment 1 of the present invention.
[Fig. 2]

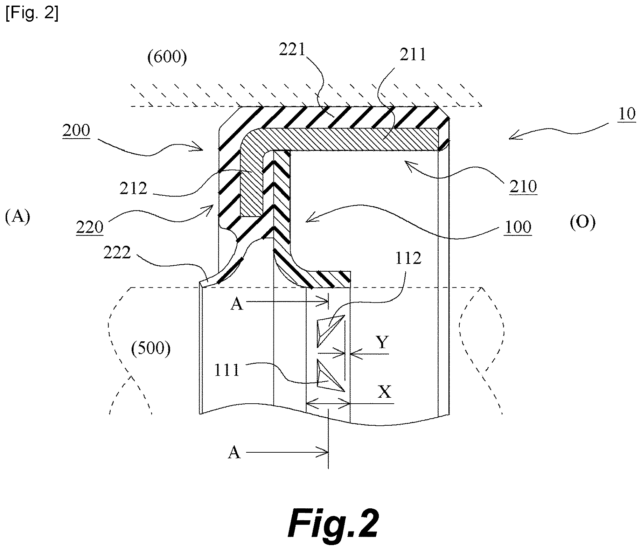

   Fig. 2 is a schematic sectional diagram of a sealing structure according to the embodiment 1 of the present invention.
[Fig. 3]

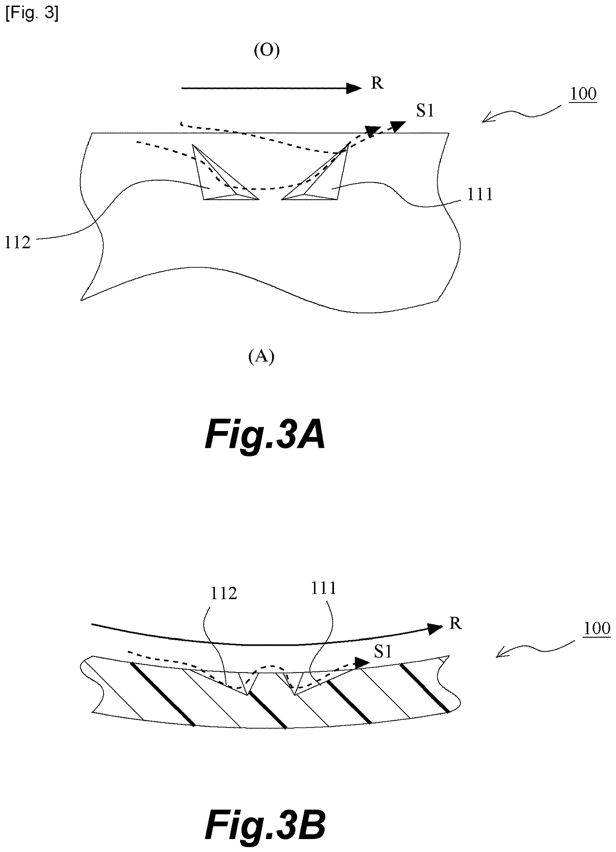

   Figs. 3 are mechanism explanatory diagrams of the sealing device according to the embodiment 1 of the present invention.
[Fig. 4]

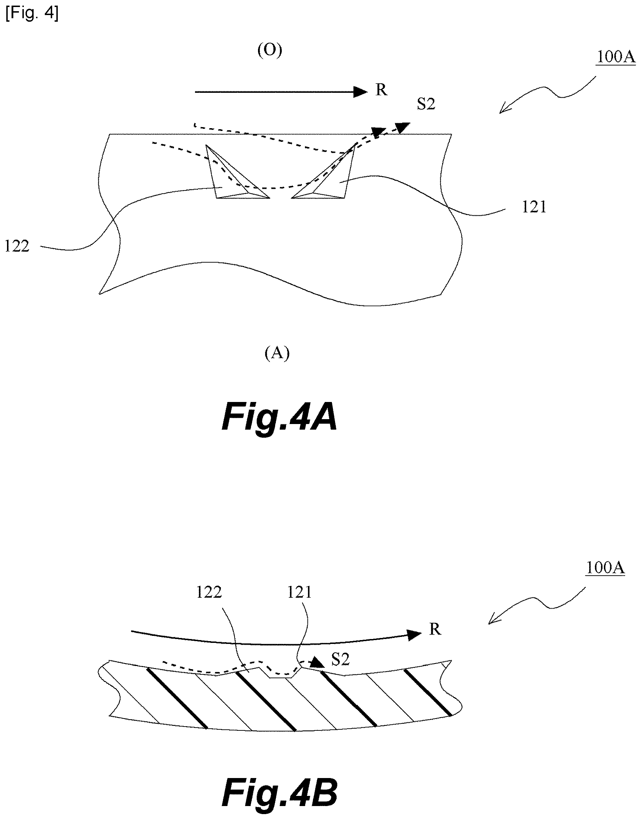

   Figs. 4 are mechanism explanatory diagrams of the sealing device according to an embodiment 2 of the present invention.
[Fig. 5]

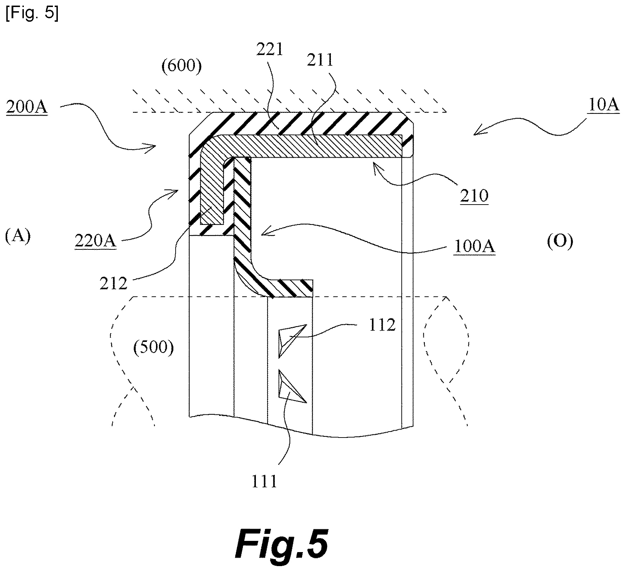

   Fig. 5 is a schematic sectional diagram of a sealing structure according to an embodiment 3 of the present invention.
[Fig. 6]

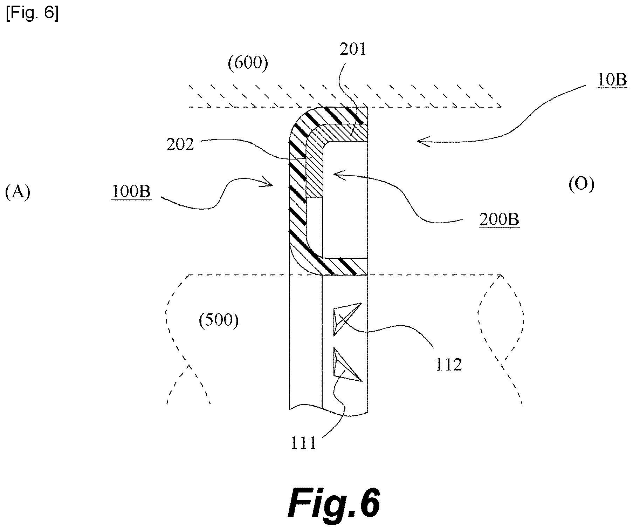

   Fig. 6 is a schematic sectional diagram of a sealing structure according to an embodiment 4 of the present invention.
[Fig. 7]

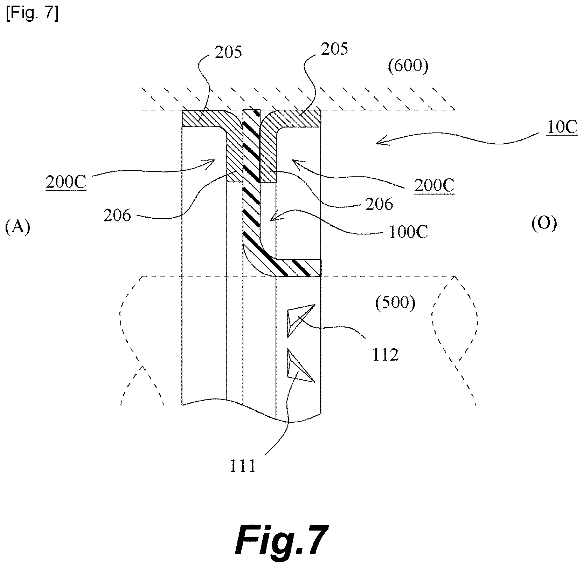

   Fig. 7 is a schematic sectional diagram of a sealing structure according to an embodiment 5 of the present invention.

### [Description of Embodiments]

Hereinafter, with reference to the drawings, embodiments for working the invention will be explained in an exemplified manner in detail on the basis of examples. However, a dimension, a material, a shape, a relative disposition thereof and the like of components described in the examples are not intended to limit a range of the invention only to them unless specifically described otherwise.

### (Embodiment 1)

With reference to Figs. 1 to 3, the sealing device according to the embodiment 1 of the present invention will be explained. Fig. 1 is a partially broken sectional diagram of the sealing device according to the embodiment 1 of the present invention. Note that the sealing device according to this embodiment has a shape substantially in rotational symmetry, and Fig. 1 illustrates a partially cut-away section of the sealing device on a plane including a center axis of the sealing device. Fig. 2 is a schematic sectional diagram of a sealing structure according to the embodiment 1 of the present invention. In Fig. 2, a section after each member is cut on a plane including the center axis of the sealing device is illustrated. Moreover, in Fig. 2, in the members constituting the sealing structure, regarding the shaft and the housing, only disposition positions thereof are indicated by dotted lines so that the constitution of an inner peripheral surface of the sealing device can be known. Figs. 3 are mechanism explanatory diagrams of the sealing device according to the embodiment 1 of the present invention. Note that Fig. 3(a) illustrates a state of the inner peripheral surface of the resin-made seal in a state where the sealing device is mounted in the annular gap between the shaft and the housing. Moreover, Fig. 3(b) illustrates a sectional diagram of the resin-made seal (corresponding to an AA section in Fig. 2) in a state where the sealing device is mounted in the annular gap between the shaft and the housing.

### <Sealing Structure>

With reference to Fig. 2, the sealing structure to which the sealing device according to this embodiment is applied will be explained. The sealing structure according to this embodiment is constituted by a shaft 500 that relatively rotates, a housing 600, and a sealing device 10 which seals an annular gap between the shaft 500 and the housing 600. The sealing device 10 is fixed to the housing 600 and provided so as to relatively rotate with respect to the shaft 500. In the drawings, a right side of the sealing device 10 is a sealing-target region side (O) in which a sealing-target fluid such as oil is sealed. In this embodiment, in the drawings, a side opposite to the sealing-target region side (O) is exposed to the atmospheric air through the sealing device 10. Hereinafter, the side where the sealing-target fluid is sealed through the sealing device 10 is called the sealing-target region side (O), while the side opposite to that is called simply an opposite side (A).

The sealing device 10 according to this embodiment can be suitably applied to a spot where the annular gap between the shaft 500 that relatively rotates and the housing 600 needs to be sealed in an automobile or various general-purpose machines. Moreover, the sealing device 10 according to this embodiment can be suitably used in a use environment in which the shaft 500 is constituted so as to relatively rotate forward/backward with respect to the housing 600. However, the sealing device 10 according to this embodiment can be applied even in a use environment in which the shaft 500 relatively rotates only in one direction with respect to the housing 600.

### <Sealing Device>

The sealing device 10 according to this embodiment will be explained in more detail. The sealing device 10 according to this embodiment is constituted by a first seal 100 as a resin-made seal and a second seal 200 as an annular member. The second seal 200 is constituted by a reinforcing ring 210 constituted by metal or the like and a seal main-body 220 made of a rubber-state elastic body provided integrally with the reinforcing ring 210. The reinforcing ring 210 has a cylindrical portion 211 and an inward flange portion 212 extending inward in a radial direction from a distal end of the cylindrical portion 211. Moreover, the seal main-body 220 includes an outer-peripheral seal portion 221 provided on an outer peripheral surface side of the cylindrical portion 211 in the reinforcing ring 210 and a dust lip 222 extending from a distal end of the inward flange portion 212. When the sealing device 10 (second seal 200) is attached to a shaft hole (hole into which the shaft 500 is inserted) formed in the housing 600, by means of close contact of the outer-peripheral seal portion 221 with an inner peripheral surface of the shaft hole, the sealing performance is exerted. Moreover, the dust lip 222 is provided slidably with respect to an outer peripheral surface of the shaft 500. This dust lip 222 plays a role of suppressing intrusion of a foreign substance such as a dust in the atmospheric air into the sealing-target region side (O). Note that, by molding the seal main-body 220 by insert molding with the reinforcing ring 210 as an insert component, the second seal 200 can be obtained.

The first seal 100 as the resin-made seal is constituted by a flat washer-shaped member. As a material for the first seal 100, polytetrafluoroethylene (PTFE) can be suitably applied. This first seal 100 has an outer-peripheral end side thereof fixed to the second seal 200 as an annular member. More specifically, the outer peripheral surface of the first seal 100 is fitted with the inner peripheral surface of the reinforcing ring 210 in the second seal 200, whereby the first seal 100 is fixed to the second seal 200.

This first seal 100 is constituted such that, by insertion of the shaft 500 into the inner-peripheral surface side thereof, it is brought into slidable contact with the outer peripheral surface of the shaft 500 in a state where the inner-peripheral end side is deformed so as to be curved toward the sealing-target region side (O) (see

Fig. 2). That is, the inner-peripheral end side of this first seal 100 is constituted to be deformed into a cylindrical shape by the insertion of the shaft 500. In a region sliding on the outer peripheral surface of the shaft 500 in this first seal 100 (region indicated by a range X in Fig. 2), a pair of screw pump grooves 111, 112 are provided. These pair of screw pump grooves 111, 112 are configured to extend such that an interval from each other is narrowed from a position away from the end part on the sealing-target region side (O) (positions away only by Y in Fig. 2) to the opposite side (A) in the region indicated by the range X, as they go toward the opposite side (A). Note that, regarding the pair of screw pump grooves 111, 112, such a configuration that only one pair is provided can be employed, but it is preferable that they are provided in plural pairs with intervals in the circumferential direction. Note that the dust lip 222 may have a slight gap with respect to the outer peripheral surface of the shaft 500.

### <Merits of Sealing Device according to This Embodiment>

According to the sealing device 10 according to this embodiment, when the shaft 500 relatively rotates forward with respect to the housing 600, by means of a screw pump effect by either one of the pair of screw pump grooves 111, 112, the sealing-target fluid which is to leak out can be returned to the sealing-target region side (O). This point will be explained by referring to Figs. 3. In Figs. 3, a state in which the fluid flows when the shaft 500 relatively rotates forward with respect to the housing 600 is schematically illustrated. In Figs. 3, an arrow R indicates a relative rotating direction of the shaft 500 with respect to the sealing device 10. Moreover, in the drawing, an arrow S1 indicates a flow of the sealing-target fluid which is to leak out from the sealing-target region side (O) to the opposite side (A). As shown, the sealing-target fluid which is to leak out from the sealing-target region side (O) to the opposite side (A) is returned to the sealing-target region side (O) by exertion of the screw pump effect by the one screw pump groove 111 in the pair of screw pump grooves 111, 112.

Moreover, when the shaft 500 relatively rotates backward with respect to the housing 600, by means of the screw pump effect by the other screw pump groove 112 in the pair of screw pump grooves 111, 112, it is needless to say that the sealing-target fluid which is to leak out can be returned to the sealing-target region side (O). As described above, in either of the case where the shaft 500 relatively rotates forward with respect to the housing 600 and the case of being rotated backward, the screw pump effect can be exerted.

Therefore, even if such a configuration that the first seal 100 which is a resin-made seal is caused to slide on the shaft 500 is employed for such an environment that a relative rotating speed of the shaft 500 with respect to the housing 600 is fast or it is difficult to raise lubricity or the like, a stable sealing performance can be exerted.

Note that, when such a configuration that a plurality of pairs of the screw pump grooves 111, 112 are provided with intervals in the circumferential direction, the screw pump effect can be exerted at plural spots in the circumferential direction. Therefore, the sealing performance can be further improved.

### (Embodiment 2)

Figs. 4 illustrate an embodiment 2 of the present invention. In this embodiment, in the configuration of the sealing device illustrated in the aforementioned embodiment 1, a configuration of a case in which a screw-pump projection is provided instead of the screw pump groove is illustrated. Since the other configurations and actions are the same as those of the embodiment 1, the same reference numerals are given to the same configuration parts, and explanation thereof will be omitted.

Figs. 4 are mechanism explanatory diagrams of the sealing device according to the embodiment 2 of the present invention. Note that Fig. 4(a) illustrates a state of an inner peripheral surface of a resin-made seal in a state where the sealing device is mounted in an annular gap between the shaft and the housing. Moreover, Fig. 4(b) illustrates a sectional diagram of the resin-made seal (corresponding to the AA section in Fig. 2 similarly to the case of the aforementioned embodiment 1) in a state where the sealing device is mounted in the annular gap between the shaft and the housing.

In the sealing device according to this embodiment, only a configuration of a first seal 100A as the resin-made seal is different from the sealing device 10 illustrated in the aforementioned embodiment 1. Therefore, explanation of the second seal 200 will be omitted. Moreover, since the sealing structure is also similar to the case of the aforementioned embodiment 1, the explanation will be omitted.

The first seal 100A according to this embodiment is also constituted by a flat washer-shaped member similarly to the case of the aforementioned embodiment 1. Moreover, as the material for the first seal 100A, polytetrafluoroethylene (PTFE) can be suitably applied. This first seal 100A is similar to the case of the aforementioned embodiment 1 also in the point that the outer-peripheral end side thereof is fixed to the second seal 200 as the annular member.

Moreover, the first seal 100A is similar to the case of the aforementioned embodiment 1 also in the point that it is constituted to be brought into slidable contact with the outer peripheral surface of the shaft 500 in the state where the inner-peripheral end side is deformed so as to be curved toward the sealing-target region side (O) by insertion of the shaft 500 into the inner-peripheral surface side (see Fig. 2). And in the first seal 100A according to this embodiment, in a region sliding on the outer peripheral surface of the shaft 500 (corresponding to the region indicated by the range X in Fig. 2 similarly to the case of the aforementioned embodiment 1), a pair of screw pump projections 121, 122 are provided. These pair of screw pump projections 121, 122 are configured so as to extend such that an interval from each other is narrowed from positions away from the end part of the sealing-target region side (O) in the region indicated by the range X to the opposite side (A) (corresponding to the positions away only by Y in Fig. 2), as they go toward the opposite side (A). Note that, regarding the pair of screw pump projections 121, 122, such a configuration that only one pair is provided can be employed, but it is preferable that they are provided in plural pairs with intervals in the circumferential direction.

As described above, in the sealing device including the first seal 100A according to this embodiment, too, the effect similar to the case of the aforementioned embodiment 1 can be obtained. This point will be explained more specifically by referring to Figs. 4. In Figs. 4, a state in which the fluid flows when the shaft 500 relatively rotates forward with respect to the housing 600 is schematically illustrated. In Figs. 4, the arrow R indicates the relative rotating direction of the shaft 500 with respect to the sealing device 10. Moreover, in the drawing, an arrow S2 indicates a flow of the sealing-target fluid which is to leak out from the sealing-target region side (O) to the opposite side (A). As shown, the sealing-target fluid which is to leak out from the sealing-target region side (O) to the opposite side (A) is returned to the sealing-target region side (O) by the exertion of the screw pump effect by the one screw pump projection 121 in the pair of screw pump projections 121, 122.

Moreover, when the shaft 500 relatively rotates backward with respect to the housing 600, by means of the screw pump effect by the other screw pump projection 122 in the pair of screw pump projections 121, 122, it is needless to say that the sealing-target fluid which is to leak out can be returned to the sealing-target region side (O). As described above, in this embodiment, too, in either of the case where the shaft 500 relatively rotates forward with respect to the housing 600 and the case of being rotated backward, the screw pump effect can be exerted. Therefore, the effect similar to that of the case of the aforementioned embodiment 1 can be obtained.

Here, a configuration of the sealing device including the resin-made seal (first seal) in the present invention can employ various configurations not limited to the configuration shown in the aforementioned embodiment 1. Particularly, as a configuration for fixing the resin-made seal, various configurations can be employed. Some examples will be shown below.

### (Embodiment 3)

Fig. 5 illustrates an embodiment 3 of the present invention. Note that, since basic configurations and actions are the same as those of the embodiment 1, the same reference numerals are given to the same configuration parts, and explanation thereof will be omitted as appropriate.

Fig. 5 is a schematic sectional diagram of a sealing structure according to the embodiment 3 of the present invention. In Fig. 5, a section after each member is cut on a plane including the center axis of the sealing device is illustrated. Moreover, in Fig. 5, in the members constituting the sealing structure, regarding the shaft and the housing, only disposition positions thereof are indicated by dotted lines so that the constitution of an inner peripheral surface of the sealing device can be known.

A sealing device 10A according to this embodiment is constituted by a first seal 100A as a resin-made seal and a second seal 200A as an annular member. The second seal 200A is constituted by the reinforcing ring 210 constituted by metal or the like and a seal main-body 220A made of the rubber-state elastic body provided integrally with the reinforcing ring 210. Since the configuration of the reinforcing ring 210 is similar to that of the reinforcing ring 210 illustrated in the embodiment 1, the explanation thereof will be omitted. Moreover, the seal main-body 220A includes the outer-peripheral seal portion 221 provided on the outer-peripheral surface side of the cylindrical portion 211 in the reinforcing ring 210. The seal main-body 220A according to this embodiment is different from the case of the aforementioned embodiment 1 only in a point that the dust lip is not provided.

The configuration of the first seal 100 as the resin-made seal is similar to the case of the aforementioned embodiment 1 and thus, the explanation thereof will be omitted. In this embodiment, too, similarly to the case of the aforementioned embodiment 1, when the outer peripheral surface of the first seal 100A is fitted with the inner peripheral surface of the reinforcing ring 210 in the second seal 200A, the first seal 100A is fixed to the second seal 200A. Moreover, the first seal 100A according to this embodiment is also configured such that, by means of the insertion of the shaft 500 into the inner-peripheral surface side, the inner-peripheral end side is brought into slidable contact with the outer peripheral surface of the shaft 500 in the state where the inner-peripheral end side is deformed so as to be curved toward the sealing-target region side (O). The working effects by the pair of screw pump grooves 111, 112 and the point that, though such a configuration that only one pair of screw pump grooves 111, 112 are provided can be employed, it is preferable to provide them in plural pairs with the intervals in the circumferential direction are as explained in the embodiment 1.

In the sealing device 10A according to this embodiment configured as above, too, it is needless to say that the effect similar to that of the case of the aforementioned embodiment 1 can be obtained. Moreover, in the sealing device 10A according to this embodiment, as explained in the embodiment 2, instead of the pair of screw pump grooves 111, 112, the pair of screw pump projections 121, 122 can be also employed.

### (Embodiment 4)

Fig. 6 illustrates an embodiment 4 of the present invention. Note that, since basic configurations and actions are the same as those of the embodiment 1, the same reference numerals are given to the same configuration parts, and explanation thereof will be omitted as appropriate.

Fig. 6 is a schematic sectional diagram of a sealing structure according to the embodiment 4 of the present invention. In Fig. 6, a section after each member is cut on a plane including the center axis of the sealing device is illustrated. Moreover, in Fig. 6, in the members constituting the sealing structure, regarding the shaft and the housing, only disposition positions thereof are indicated by dotted lines so that the constitution of an inner peripheral surface of the sealing device can be known.

A sealing device 10B according to this embodiment is constituted by a first seal 100B as a resin-made seal and a fixed ring 200B as an annular member constituted by metal or the like. The fixed ring 200B has a cylindrical portion 201 and an inward flange portion 202 extending inward in the radial direction from a distal end of the cylindrical portion 201. Moreover, in this embodiment, too, the first seal 100B is constituted by a flat washer-shaped member. As a material for this first seal 100B, polytetrafluoroethylene (PTFE) can be suitably applied as explained in the embodiment 1. This first seal 100B has an outer-peripheral end side thereof fixed to the fixed ring 200B as the annular member. In the case of this embodiment, a part on the outer-peripheral end side of the first seal 100B is fixed to the fixed ring 200B by being sandwiched between the outer peripheral surface of the cylindrical portion 201 of the fixed ring 200B and the shaft-hole inner peripheral surface of the housing 600.

In this embodiment, too, the first seal 100B is configured such that, by means of the insertion of the shaft 500 into the inner-peripheral surface side, the inner-peripheral end side is brought into slidable contact with the outer peripheral surface of the shaft 500 in the state where the inner-peripheral end side is deformed so as to be curved toward the sealing-target region side (O). And in the region sliding on the outer peripheral surface of the shaft 500 in this first seal 100B, the pair of screw pump grooves 111, 112 are provided. Since the configuration and the working effects of the pair of screw pump grooves 111, 112 are similar to the case of the aforementioned embodiment 1, the explanation thereof will be omitted. Moreover, regarding the pair of screw pump grooves 111, 112, such a configuration that only one pair is provided can be employed, but it is also preferable that, as explained in the embodiment 1, they are provided in plural pairs with intervals in the circumferential direction.

In the sealing device 10B according to this embodiment configured as above, too, it is needless to say that the effect similar to that of the case of the aforementioned embodiment 1 can be obtained. Moreover, in the sealing device 10B according to this embodiment, too, as explained in the embodiment 2, instead of the pair of the screw pump grooves 111, 112, the pair of screw pump projections 121, 122 may be employed.

### (Embodiment 5)

Fig. 7 illustrates an embodiment 5 of the present invention. Note that, since basic configurations and actions are the same as those of the embodiment 1, the same reference numerals are given to the same configuration parts, and explanation thereof will be omitted as appropriate.

Fig. 7 is a schematic sectional diagram of a sealing structure according to the embodiment 5 of the present invention. In Fig. 7, a section after each member is cut on a plane including the center axis of the sealing device is illustrated. Moreover, in Fig. 7, in the members constituting the sealing structure, regarding the shaft and the housing, only disposition positions thereof are indicated by dotted lines so that the constitution of an inner peripheral surface of the sealing device can be known.

A sealing device 10C according to this embodiment is constituted by a first seal 100C as a resin-made seal and a pair of fixed rings 200C (annular member) constituted by metal or the like. Each of the pair of fixed rings 200C has a cylindrical portion 205 and an inward flange portion 206 extending inward in the radial direction from a distal end of the cylindrical portion 205. Moreover, in this embodiment, too, the first seal 100C is constituted by a flat washer-shaped member. As a material for the first seal 100C, polytetrafluoroethylene (PTFE) can be suitably applied as explained in the embodiment 1. This first seal 100C has an outer-peripheral end side thereof fixed to the pair of fixed rings 200C. In the case of this embodiment, a part on the outer-peripheral end side of the first seal 100C is fixed to the pair of fixed rings 200C by being sandwiched by each of the inward flange portions 206 of the pair of fixed rings 200C.

In this embodiment, too, the first seal 100C is configured such that, by means of the insertion of the shaft 500 into the inner-peripheral surface side, the inner-peripheral end side is brought into slidable contact with the outer peripheral surface of the shaft 500 in the state where the inner-peripheral end side is deformed so as to be curved toward the sealing-target region side (O). And in the region sliding on the outer peripheral surface of the shaft 500 in this first seal 100C, the pair of screw pump grooves 111, 112 are provided. Since the configuration and the working effects of the pair of screw pump grooves 111, 112 are similar to the case of the aforementioned embodiment 1, the explanation thereof will be omitted. Moreover, regarding the pair of screw pump grooves 111, 112, such a configuration that only one pair is provided can be employed, but it is also preferable that, as explained in the embodiment 1, they are provided in plural pairs with intervals in the circumferential direction.

In the sealing device 10C according to this embodiment as configured as above, too, it is needless to say that the effect similar to that of the case of the aforementioned embodiment 1 can be obtained. Moreover, in the sealing device 10C according to this embodiment, too, as explained in the embodiment 2, instead of the pair of the screw pump grooves 111, 112, the pair of screw pump projections 121, 122 may be employed.

### [Reference Signs List]

10, 10A, 10B, 10BC Sealing device
100, 100A, 100B, 100C First seal (resin-made seal)
111, 112 Screw pump groove
121, 122 Screw pump projection
200, 200A Second seal (annular member)
200B, 200C Fixed ring (annular member)
201, 205 Cylindrical portion
202, 206 Inward flange portion
210 Reinforcing ring
211 Cylindrical portion
212 Inward flange portion
220, 220A Seal main-body
221 Outer-peripheral seal portion
222 Dust lip
500 Shaft
600 Housing

## Claims

1. A sealing device which seals an annular gap between a shaft and a housing that relatively rotate, comprising:
a resin-made seal which is brought into slidable contact with an outer peripheral surface of the shaft in a state where an inner-peripheral end side is deformed to be curved toward a sealing-target region side by insertion of the shaft, wherein
in a region sliding on the outer peripheral surface of the shaft in the resin-made seal, a pair of screw pump grooves or screw pump projections are provided that extend from a position away from an end part on the sealing-target region side toward an opposite side to the sealing-target region side, and an interval between the pair of screw pump grooves or screw pump projections is narrowed as they go toward the opposite side.

2. The sealing device according to claim 1, wherein
the pair of screw pump grooves or screw pump projections are provided in plural pairs with an interval in a circumferential direction.

3. The sealing device according to claim 1 or 2, wherein
the resin-made seal is constituted by a flat washer-shaped member.

4. The sealing device according to claim 3, further comprising:
at least one annular member fixed to a shaft hole formed in the housing, wherein
an outer-peripheral end side of the resin-made seal is fixed to the at least one annular members.
